# FASCICULE DE BREVET EUROPEEN

(11) **EP 2 808 528 B1**
(45) Date de publication et mention de la délivrance du brevet: **05.08.2020**
(21) Numéro de dépôt: 13169300.4
(22) Date de dépôt: 27.05.2013
(51) Int. Cl.: F01B 9/06, F03G 6/04, F02G 1/044, F02G 1/055, F01B 1/06, F01B 9/02, F03G 6/06

(54) **Moteur à détente de fluide**
Motor mit Flüssigkeitsausdehnung
Fluid expansion motor

(43) Date de publication de la demande: 03.12.2014
(73) Titulaire: Frem, Neemat, Jounieh (LB)
(72) Inventeur: Frem, Neemat, Jounieh (LB)
(74) Mandataire: Cabinet Beau de Loménie

(56) Documents cités:
- BE-A- 523 269
- DE-A1-102004 059 928
- US-A- 5 735 123
- US-A- 5 884 481
- US-A1- 2002 124 561
- US-A1- 2004 222 636
- US-A1- 2012 137 671

## Description

### Arrière-plan de l'invention

La présente invention se rapporte au domaine général des moteurs rotatifs. Les moteurs rotatifs les plus répandus sont des moteurs à explosion tournant autour de leur vilebrequin qui reste fixe. Dans ces moteurs, les cylindres sont disposés en étoile.

Les principaux avantages de ce type de moteur sont une masse réduite et un faible niveau de vibrations par rapport à un moteur à cylindres fixes. Un moteur rotatif à détente de fluide chaud est décrit dans le document DE 10 2004 059928.

Cependant, les moteurs rotatifs sont considérés à l'heure actuelle comme relativement polluants en ce qu'ils ont une consommation en carburant très élevée pour un rendement assez faible, et en ce qu'ils utilisent une combustion interne ou externe. Les moteurs rotatifs connus ont en outre besoin d'une quantité d'huile très importante pour assurer leur lubrification.

Or, il existe un besoin pour des moteurs rotatifs non polluants qui peuvent être utilisés dans différents type d'environnements (habitation, installation industrielle, etc.).

### Objet et résumé de l'invention

La présente invention a pour but de proposer une nouvelle conception de moteur rotatif qui peut être entraîné sans nécessiter une combustion interne ou externe.

Ce but est atteint grâce à un moteur à détente de fluide chaud selon la revendication indépendante 1.

Ainsi, le moteur rotatif selon l'invention est entraîné grâce à la variation de volume du fluide présent dans chaque module d'actionnement. Le moteur de l'invention est, par conséquent, très peu polluant en ce qu'il n'utilise pas de moyens de combustion interne ou externe pour son entraînement et ne rejette donc pas de gaz de combustion. Le moteur de l'invention demande également peu d'entretien et a un fonctionnement très silencieux.

En outre, chaque module d'actionnement et, par conséquent, le moteur, présentent une structure compacte notamment grâce à la présence d'un circuit de circulation de fluide reliant le dispositif de chauffage solaire à la chambre de travail du piston moteur.

Par ailleurs, dans le moteur de l'invention, chaque module d'actionnement, dont le fonctionnement est basé sur le principe du moteur Stirling, est en rotation permanente autour de l'arbre central, ce qui permet de créer une ventilation naturelle sur la paroi externe de la chambre de travail du piston moteur et d'accélérer le refroidissement du fluide en fin de cycle thermodynamique. On améliore ainsi le rendement du moteur.
chambre de travail du piston moteur et d'accélérer le refroidissement du fluide en fin de cycle thermodynamique. On améliore ainsi le rendement du moteur.

chaque module d'actionnement comprend un régénérateur de gaz s'étendant autour de la chambre haute température. Ainsi, la chaleur du fluide circulant depuis le dispositif de chauffage en direction de la chambre de travail peut être captée pour être restituée lors de la circulation inverse du fluide, ce qui permet d'améliorer le rendement du moteur.

Selon un premier aspect de l'invention, chaque module d'actionnement comprend un bloc-cylindres comportant un logement interne correspondant à la chambre de travail du piston moteur, ledit bloc-cylindres comprenant des ailettes de refroidissement sur sa surface externe permettant d'accélérer encore le refroidissement du fluide dans la chambre de travail lorsque que le module d'actionnement est en rotation.

Selon un deuxième aspect de l'invention, le circuit de circulation de fluide de chaque module d'actionnement comprend un dissipateur de chaleur s'étendant autour de la chambre basse température qui permet d'accélérer le refroidissement du fluide en direction de la chambre de travail.

Selon un troisième aspect de l'invention, le dispositif de chauffage de fluide comprend une pluralité de boîtiers collecteurs renfermant chacun un réseau de canaux s'étendant entre une entrée et une sortie, l'entrée de chaque boîtier étant connectée à la chambre haute température du module d'actionnement correspondant et la sortie dudit boîtier étant connectée au circuit de circulation de fluide dudit module d'actionnement correspondant. On individualise ainsi le chauffage du fluide dans chaque module d'actionnement.

Selon un quatrième aspect de l'invention, le moteur comprend un dispositif de concentration du rayonnement solaire apte à concentrer des rayons solaires sur les boîtiers collecteurs du dispositif de chauffage de fluide.

Selon un cinquième aspect de l'invention, le moteur comprend des moyens de chauffage aptes à transmettre de la chaleur aux boîtiers collecteurs du dispositif de chauffage de fluide.

Selon l'invention, dans chaque module d'actionnement, le piston moteur et le piston de déplacement sont disposés de façon adjacente dans un même plan parallèle à l'axe de l'arbre central. Grâce à cette disposition, il est possible de minimiser l'encombrement de chaque module d'actionnement et d'améliorer la compacité du moteur.

Selon l'invention, chaque piston de déplacement est relié à une première extrémité d'un basculeur via une tige de guidage, la deuxième extrémité du basculeur étant reliée à une extrémité d'une tige de commande, l'extrémité opposée de la tige de commande étant reliée à un suiveur de came montée sur came solidaire de l'arbre central.

Selon un sixième aspect de l'invention, chaque piston moteur est relié à une extrémité d'une bielle, l'extrémité opposée de la bielle étant reliée à une tête montée sur un maneton d'un vilebrequin présent sur l'arbre central.

Selon un septième aspect de l'invention chaque module d'actionnement contient un fluide gazeux choisi parmi au moins un des fluides gazeux suivants : air, hydrogène, fréon et hélium.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une en perspective d'un mode de réalisation d'un moteur solaire à expansion de fluide conforme à l'invention;
- les figure 2A et 2B sont des vues éclatées du moteur de la figure 1;
- la figure 3 est une vue en perspective agrandie du dispositif de chauffage solaire de fluide représenté sur les figures 2A et 2B;
- les figures 4A et 4B sont des vues respectivement en perspective et en coupe de l'arbre représenté sur les figures 2A et 2B;
- la figure 5A est une vue en coupe d'un module d'actionnement du moteur de la figure 1;
- la figure 5B est une vue de détail d'une partie du module d'actionnement de la figure 5A;
- les figures 6A à 6C, 7A à 7C, 8A à 8C et 9A à 9C montrent le fonctionnement du moteur de la figure 1 sur un tour de celui-ci;
- la figure 10 montre un système utilisant le moteur de la figure 1 qui permet de récupérer l'énergie produite par le moteur;
- la figure 11 montre le système de la figure 10 lorsque le moteur est soumis à un rayonnement solaire.

### Description détaillée d'un mode de réalisation

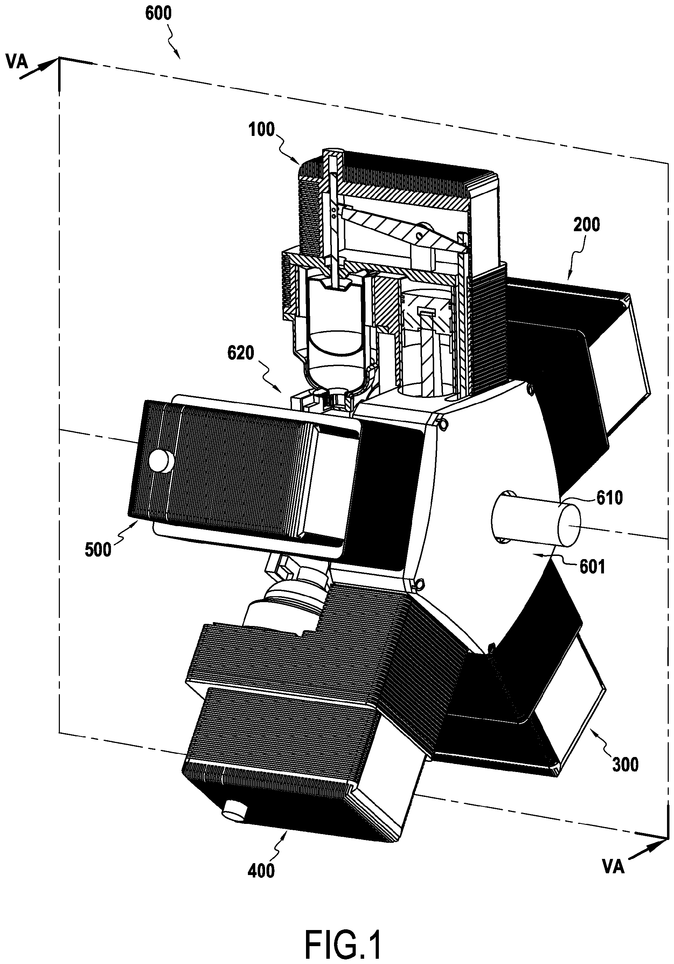

La figure 1 illustre un moteur à détente de fluide 600 conformément à un mode de réalisation de l'invention. Dans le mode de réalisation décrit ici, le moteur comprend cinq modules d'actionnement 100 à 500 disposés en étoile. Comme décrit ci-après en détail, les parties mobiles de chaque module d'actionnement sont reliées à un arbre central 610 à l'intérieur d'un carter moteur 601. Le moteur 600 comprend également un dispositif de chauffage de fluide 620 qui sera également décrit ci-après en détail.

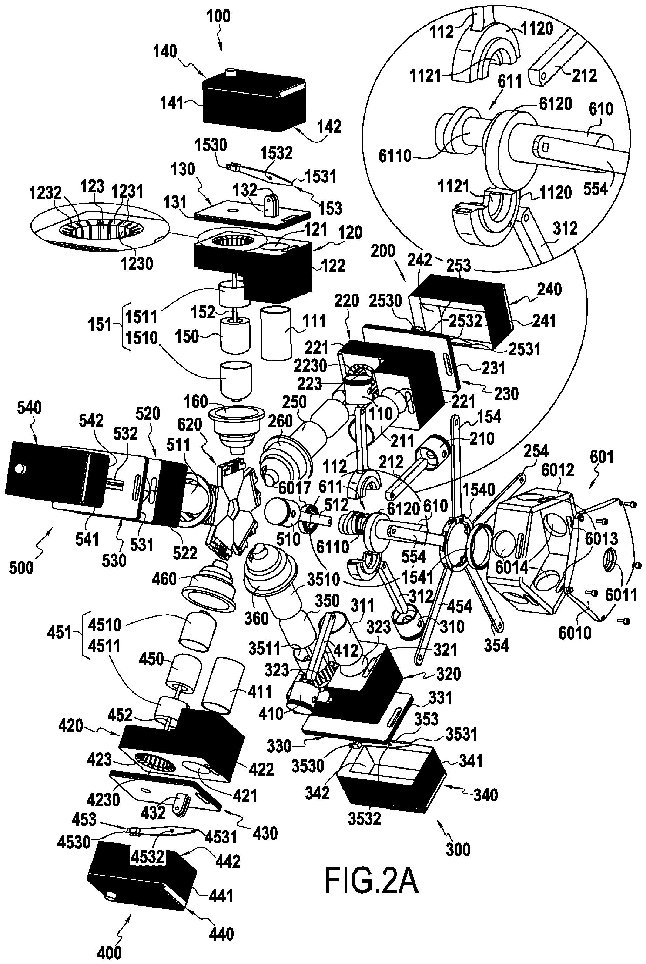

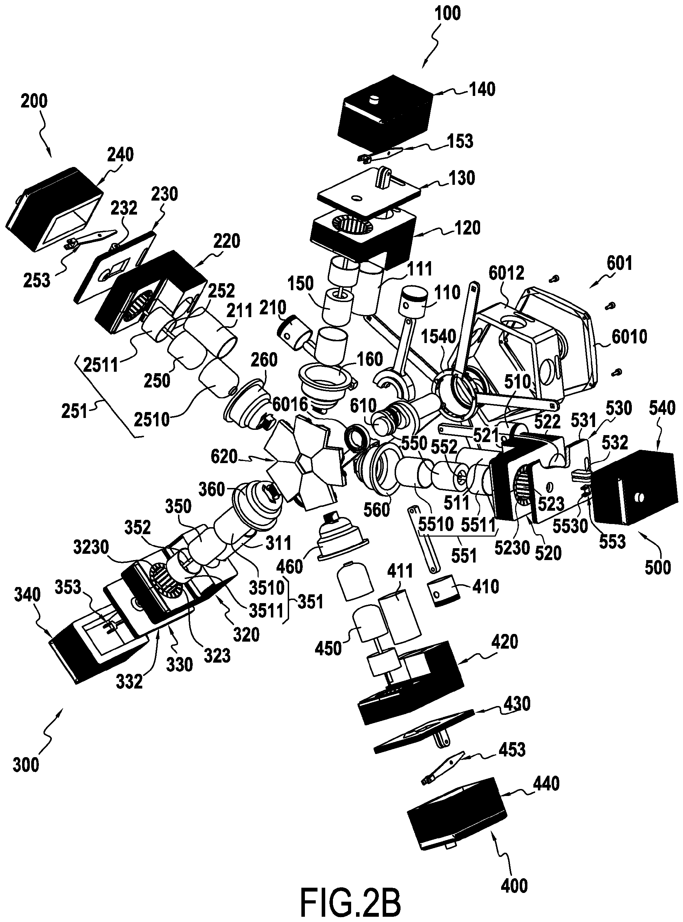

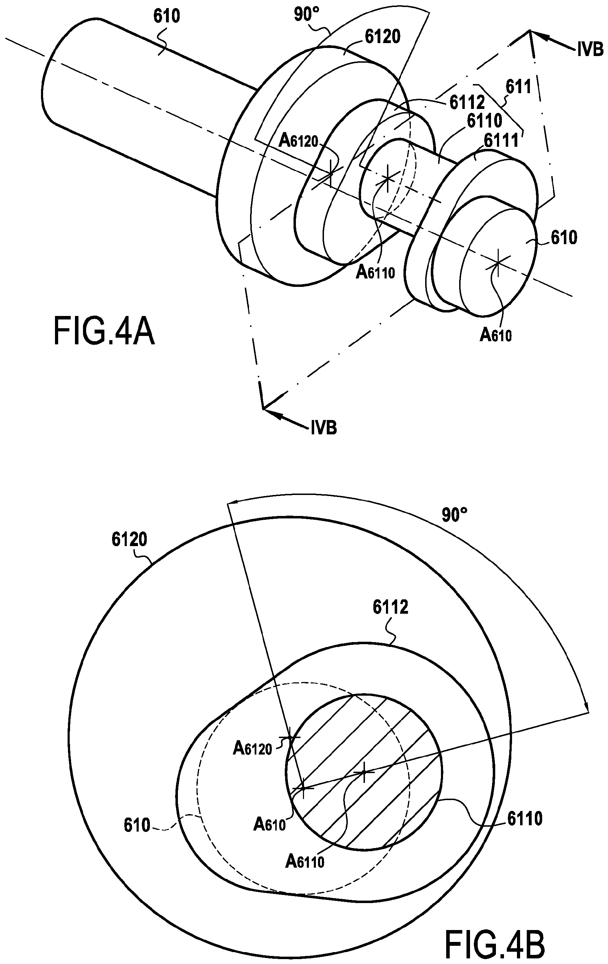

Comme illustré sur les figures 2A et 2B, chaque module d'actionnement 100, respectivement 200, 300, 400 et 500, comprend un piston moteur 110, respectivement 210, 310, 410 et 510. Chaque piston moteur 110, respectivement 210, 310, 410 et 510 est mobile dans une chemise 111, respectivement 211, 311, 411 et 511 et est relié à une bielle 112, respectivement 212, 312, 412 et 512. La bielle 112, qui correspond à la bielle maîtresse, comporte à son extrémité opposée à celle reliée au piston moteur 110 une tête 1120 sur laquelle sont montées de manière articulée les bielles 212, 312, 412 et 512. La tête de bielle 1120 est montée sur un maneton ou palier de bielle 6110 d'un vilebrequin 611 présent sur l'arbre 610, un roulement 1121 étant interposé entre le maneton 6110 et la tête de bielle 1120. Le maneton 6110 est maintenu sur l'arbre 610 entre deux joues 6111 et 6112 (figure 4A).

Chaque chemise 111, respectivement 211, 311, 411 et 511 est fixée dans un logement 121, respectivement 221, 321, 421 et 521 d'un bloc-cylindres 120, respectivement 220, 320, 420 et 520 comportant sur sa surface extérieure des ailettes de refroidissement 122, respectivement 222, 322, 422 et 522.

Chaque bloc-cylindres 120, respectivement 220, 320, 420 et 520 est fermé dans sa partie supérieure par une plaque 130, respectivement 230, 330, 430 et 530 comportant des ailettes de refroidissement 131, respectivement 231, 331, 431 et 531 et un capot 140, respectivement 240, 340, 440 et 540 comportant également des ailettes de refroidissement 141, respectivement 241, 341, 441 et 541.

Chaque module d'actionnement 100, respectivement 200, 300, 400 et 500, comprend en outre un piston de déplacement 150, respectivement 250, 350, 450 et 550. Chaque piston de déplacement 150, respectivement 250, 350, 450 et 550 est mobile dans une chemise 151, respectivement 251, 351, 451 et 551 formée chacune par la réunion de deux éléments 1510/1511, respectivement 2510/2511, 3510/3511, 4510/4511 et 5510/5511. L'élément 1510, respectivement 2510, 3510, 4510 et 5510 de la chemise 151, respectivement 251, 351, 451 et 551 est logé dans un carter cylindrique 160, respectivement 260, 360, 460 et 560. L'élément 1511, respectivement 2511, 3511, 4511 et 5511 de la chemise 151, respectivement 251, 351, 451 et 551 est fixé dans un logement 123, respectivement 223, 323, 423 et 523 du bloc-cylindres 120, respectivement 220, 320, 420 et 520. Le logement 123, respectivement 223, 323, 423 et 523 comporte un dispositif de refroidissement 1230, respectivement 2230, 3230, 4230 et 5230 constitué ici par des ailettes de refroidissement. Comme illustré pour le logement 123 sur la figure 2A, les ailettes 1231 sont définies par des rainures 1232 ménagées dans le logement 123. Des rainures similaires (non représentées sur les figures 2A et 2B) sont également ménagées dans les logements 223, 323, 423 et 523 pour former les ailettes de refroidissement similaires (non représentées sur les figures 2A et 2B) des dispositifs de refroidissement 2230, 3230, 4230 et 5230.

Chaque piston de déplacement 150, respectivement 250, 350, 450 et 550 est relié à une tige de commande 152, respectivement 252, 352, 452 et 552, elle-même reliée à une première extrémité 1530, respectivement 2530, 3530, 4530 et 5530 d'un basculeur 153, respectivement 253, 353, 453 et 553. La seconde extrémité 1531, respectivement 2531, 3531, 4531 et 5531 du basculeur 153, respectivement, 253, 353, 453 et 553 est reliée à une tige de bascule 154, respectivement 254, 354, 454 et 554. Chaque basculeur 153, respectivement, 253, 353, 453 et 553 comprend un axe 1532, respectivement 2532, 3532, 4532 et 5532 monté sur un support 132, respectivement 232, 332, 432 et 532 présent sur la plaque 130, respectivement 230, 330, 430 et 530. Chaque basculeur 153, respectivement, 253, 353, 453 et 553 est logé dans une cavité 142, respectivement, 242, 242, 442 et 542 ménagée dans le capot 140, respectivement 240, 340, 440 et 540.

La tige de bascule 154, qui correspond à la tige de bascule maîtresse, comporte à son extrémité opposée à celle reliée à la seconde extrémité 1531 du basculeur 153 un suiveur de came 1540 sur lequel sont montées de manière articulée les tiges de bascule 254, 354, 454 et 554. Le suiveur de came 1540 est monté sur une came 6120 présente sur l'arbre 610, un roulement 1541 étant interposé entre la came 6120 et le suiveur de came 1540.

La partie de l'arbre comportant le vilebrequin 611 et la came 6120 est enfermée dans le carter moteur 601 qui est formé d'une enceinte 6012, d'un couvercle 6010 et d'un fond 6015. L'enceinte 6012 comporte des premières ouvertures 6013 pour le passage des tiges de bascule 154, 254, 354, 454 et 554 et des deuxièmes ouvertures 6014 pour le passage des bielles 112, 212, 312, 412 et 512. Le fond du carter 6015 comportent un évidement 6016 formant un palier pour supporter l'extrémité 610a de l'arbre central 610 via un roulement 6017. Le couvercle 6010 comporte une ouverture centrale 6011 pour le passage de l'autre extrémité 601b de l'arbre 610, l'arbre étant supporté dans l'ouverture 6011 par un roulement 6018.

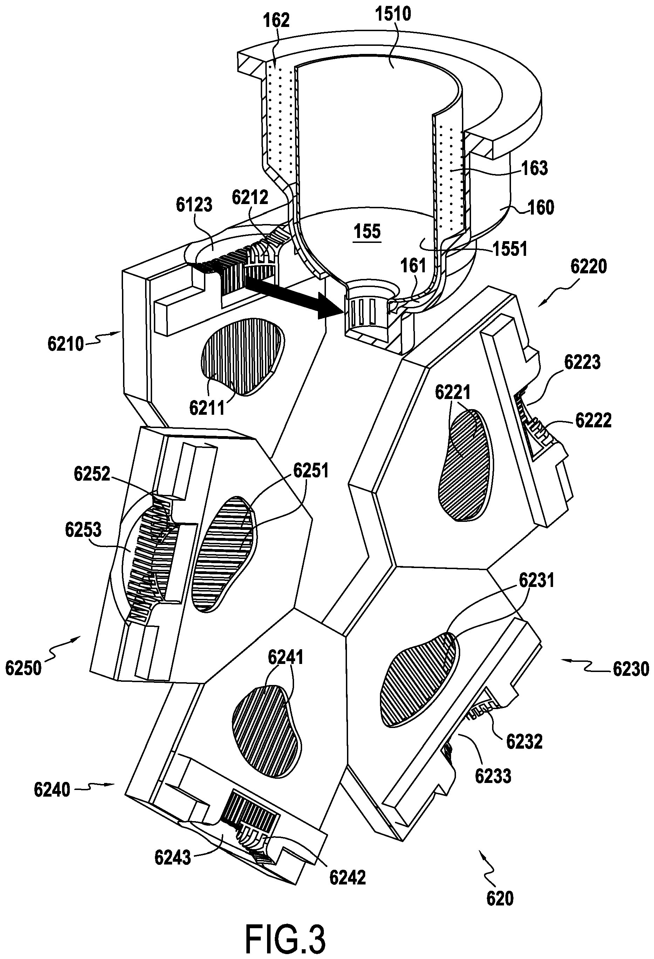

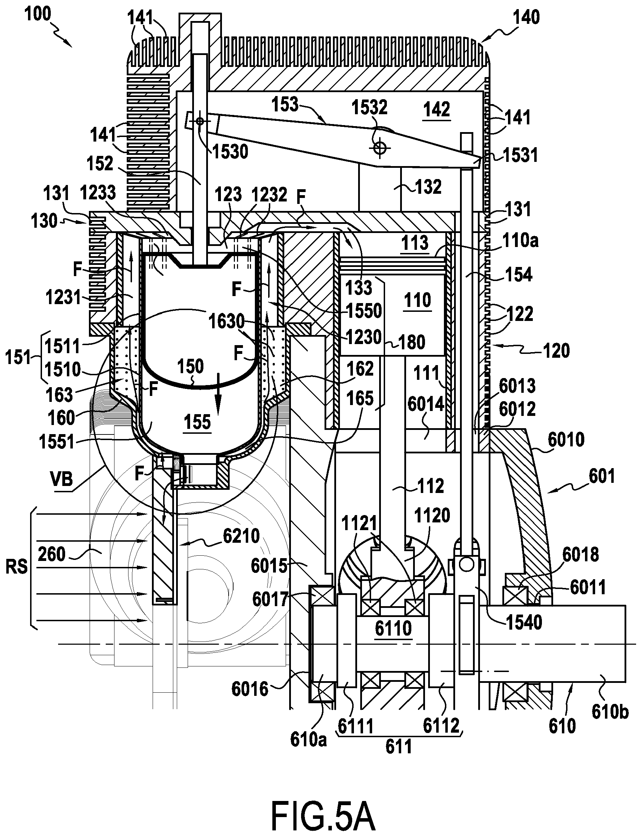

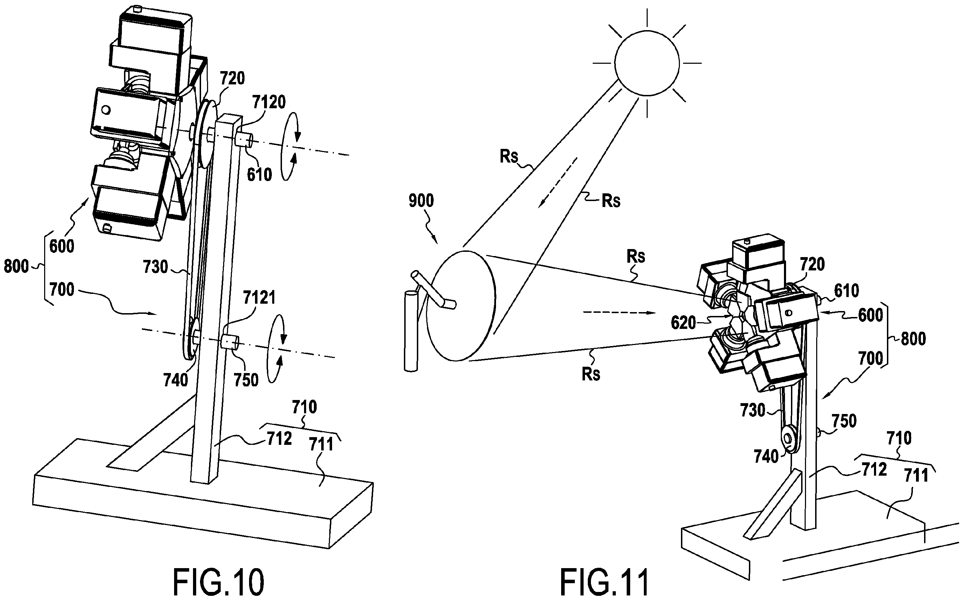

Comme illustré sur la figure 3, le dispositif de chauffage 620 est formé d'une pluralité de boîtiers collecteurs, ici cinq boîtiers 6210, 6220, 6230, 6240 et 6250, chacun respectivement associé à un module d'actionnement 100, respectivement 200, 300, 400 et 500. Chaque boîtier 6210, respectivement 6220, 6230, 6240 et 6250 renferme un réseau de canaux 6211, respectivement 6221, 6231, 6241 et 6251 qui s'étend entre une entrée 6212, respectivement 6222, 6232, 6242 et 6252 et une sortie 6213, respectivement 6223, 6233, 6243 et 6253. Dans le mode de réalisation décrit ici, le dispositif de chauffage 620 est destiné à être exposé à un rayonnement solaire Rs qui réchauffe le fluide présent dans chaque boîtier 6210, respectivement 6220, 6230, 6240 et 6250 (figure 5A). Un rayonnement solaire peut être par exemple concentré sur chacun des boîtiers du dispositif de chauffage grâce à un miroir parabolique disposé par rapport au moteur 600 de manière à ce que le foyer du miroir corresponde à la position du dispositif de chauffage 620 (figure 11). Le moteur à détente de fluide peut néanmoins utiliser d'autres sources de chaleur que le rayonnement solaire. Le dispositif de chauffage 620 peut être notamment associé à des moyens de chauffage, par exemple un dispositif électriques ou à combustible (gaz ou liquide), qui sont apte à transmettre de la chaleur aux boîtiers du dispositif de chauffage 620 afin de chauffer le fluide présents dans ces derniers.

La figure 5A illustre la structure interne du module d'actionnement 100. Le piston moteur 110 est logé dans la chemise 111 qui forme une enceinte délimitant une chambre de travail 113 dont le volume, compris entre l'extrémité 110a du piston moteur 110 et la plaque 130, est variable en fonction de la position du piston moteur 110. De même, le piston de déplacement 150 est mobile dans une enceinte 155 délimitée par la chemise 151, le piston de déplacement séparant dans cette enceinte une chambre basse température 1150 et une chambre haute température 1151. Les deux chambres 1150 et 1151 ont un volume variable en fonction de la position du piston de déplacement.

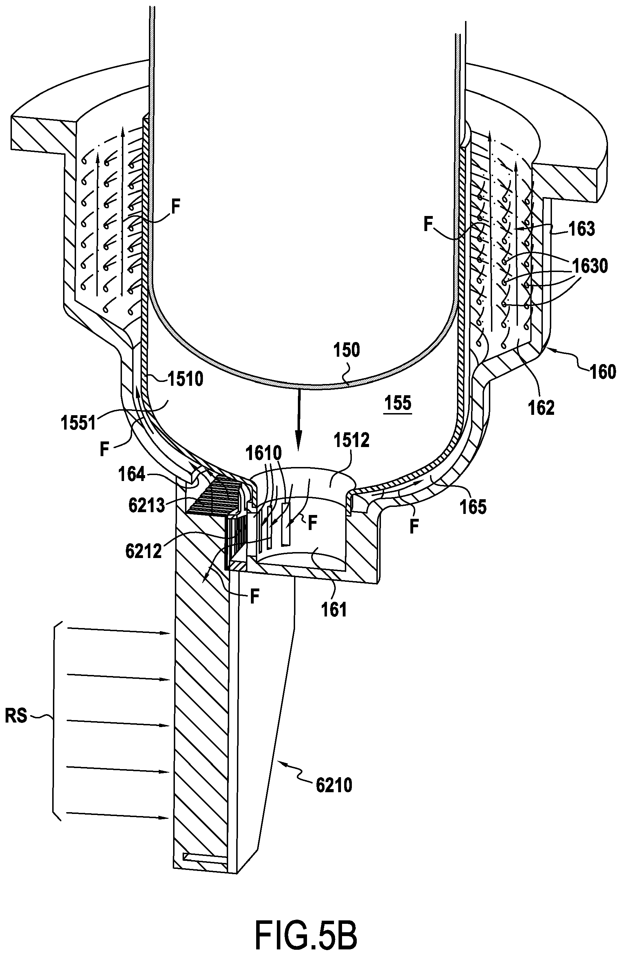

Comme illustré sur la figure 5B, le fond de l'élément 1510 de la chemise 151 comporte une ouverture 1512 débouchant dans le fond 161 du carter cylindrique 160, le fond 161 comportant des ouvertures 1610 coopérant avec l'entrée 6212 du boîtier 6210 du dispositif de chauffage 620 qui reçoit un rayonnement solaire Rs. Le carter cylindrique 160 comporte en outre une ouverture 164 coopérant avec la sortie 6213 du boîtier 6210 du dispositif de chauffage solaire 620.

Le module d'actionnement 100 comporte un circuit fermé de circulation de fluide 180 formé entre le boîtier 6210 et la chambre de travail 113, ce circuit étant formé par un interstice circulaire 165 correspondant à un jeu entre l'élément 1510 de la chemise 151 et le carter 160, une enceinte cylindrique 162 comprise également entre l'élément 1510 de la chemise 151 et le carter 160, le dispositif de refroidissement 1230, la chambre basse température 1550, un évidement 133 ménagé dans la plaque 130 et la chambre haute température 1551. Le volume interne du module d'actionnement, constitué par le boîtier 6210, la chambre de travail 113 et le circuit de circulation de fluide 180, est rempli avec un fluide gazeux qui se dilate lorsqu'on élève sa température, c'est-à-dire un fluide ayant un coefficient de dilatation thermique élevé. Un tel fluide peut-être notamment choisi parmi les fluides suivant: air, hydrogène, fréon et hélium. Tout autre fluide ayant la capacité de se dilater suffisamment pour entraîner chaque module d'actionnement peut être utilisé dans le moteur de l'invention. Chaque module d'actionnement comprend au moins une valve permettant de vidanger et de remplir chaque circuit de circulation avec le fluide désiré (non représentée sur les figures).

Le piston moteur 110 et le piston de déplacement 150 sont disposés de façon adjacente dans un même plan parallèle à l'axe de l'arbre central en particulier grâce à l'utilisation du basculeur 153 placé au-dessus du piston moteur 110 qui permet de disposer la tige de commande 152 et la tige de bascule 154 au plus près du piston moteur et dans le même plan que celui-ci. Grâce à cette disposition, il est possible de minimiser l'encombrement de chaque module d'actionnement et d'améliorer la compacité du moteur.

Les figures 5A et 5B représentent le module d'actionnement 100, lorsque le fluide F circule depuis la sortie 6213 du boîtier 6210 dans lequel il est chauffé jusqu'à la chambre de travail 113. Plus précisément, sous l'effet de son expansion et/ou du mouvement du piston de déplacement 150 vers le bas, le fluide F circule tout d'abord dès sa sortie du boîtier 6210 dans un interstice circulaire 165 correspondant à un jeu entre l'élément 1510 de la chemise 151 et le carter 160 (figure 5B). Le fluide F arrive ensuite dans l'enceinte cylindrique 162. Dans le mode de réalisation décrit ici, l'enceinte cylindrique 162 renferme un régénérateur de gaz 163 correspondant à un matériau ayant une bonne capacité calorifique comme des fils de cuivre 1630 par exemple. Dans ce cas, une partie importante de l'énergie thermique du fluide F est captée par le régénérateur 163. Le fluide F refroidi circule ensuite à travers les rainures 1232 situées entre les ailettes 1231 du dispositif de refroidissement 1230 entourant le logement 123 du bloc-cylindres 120 de manière à déboucher au niveau d'un interstice annulaire 1233 ménagé entre le sommet du dispositif de refroidissement 1230 et la plaque 130, l'interstice annulaire 1233 communicant à la fois avec la chambre basse température 1550 et l'évidement 133 et s'étendant entre la chambre basse température 1150 et la chambre de travail 113. Le fluide F peut ainsi rejoindre la chambre de travail 113 en passant par l'évidement 133.

Lors des phases du cycle thermodynamique du module d'actionnement correspondant à une diminution du volume du fluide F et à la remontée du piston moteur 110, le fluide F circule depuis la chambre de travail 113 jusqu'au boîtier 6210 en passant respectivement par l'évidement 133, le dispositif de refroidissement 1230, le régénérateur 163, l'interstice circulaire 165 et la sortie 6213 du boîtier 6210. Lors de la remontée du piston de déplacement 150, une partie du fluide F présent dans la chambre basse température est amenée dans le boîtier 6210 par le même chemin.

Comme décrit précédemment, le piston moteur 110 est relié au maneton 6110 solidaire de l'arbre 610 par sa bielle 112 tandis que le piston de déplacement est relié à la came 6120 également solidaire de l'arbre 610 par la tige de commande 152, le basculeur 153 et la tige de bascule 154. Comme illustrés sur les figures 4A et 4B, le maneton 6110 tourne autour de son axe A₆₁₁₀ tandis que la came 6120 tourne autour de son axe A₆₁₂₀, les axes A₆₁₁₀ et A₆₁₂₀ étant à des positions excentrées par rapport à l'axe A₆₁₀ de l'arbre 610. En outre, les axes A₆₁₁₀ et A₆₁₂₀ sont placées par rapport à l'axe A₆₁₀ à des positions respectives formant un angle de 90° avec l'axe A₆₁₀. Les axes A₆₁₁₀ et A₆₁₂₀ tournent ainsi autour de l'axe A₆₁₀ avec un déphasage angulaire de 90° de sorte que le mouvement du piston moteur 110 présente un retard de phase de 90° sur le mouvement du piston de déplacement 150.

La structure et le fonctionnement des modules d'actionnement 200, 300, 400 et 500 sont identiques à ceux qui viennent d'être décrits pour le module d'actionnement 100 et ne seront pas décrites à nouveau par souci de simplification. Les modules d'actionnement 200, 300, 400 et 500 diffèrent simplement du module d'actionnement 100 en ce que les bielles 212, 312, 412 et 512 des pistons moteurs 210, 310, 410 et 510 ainsi que les tiges de bascules 254, 354, 454 et 554 des pistons de déplacement 250, 350, 450 et 550 sont respectivement des bielles et des tiges de commandes suiveuses alors que la bielle 112 et la tige de commande 154 du module d'actionnement 100 sont respectivement une bielle et une tige de commande maîtresses.

On décrit maintenant le fonctionnement du moteur 600 sur un tour moteur (360°), c'est-à-dire les positions du moteur 600 ainsi que celles des éléments du module d'actionnement 100 respectivement au départ d'un tour (0°), après un quart de tour (90°), après une moitié de tour (180°), après trois-quarts de tour (270°) et après un tour complet (360°).

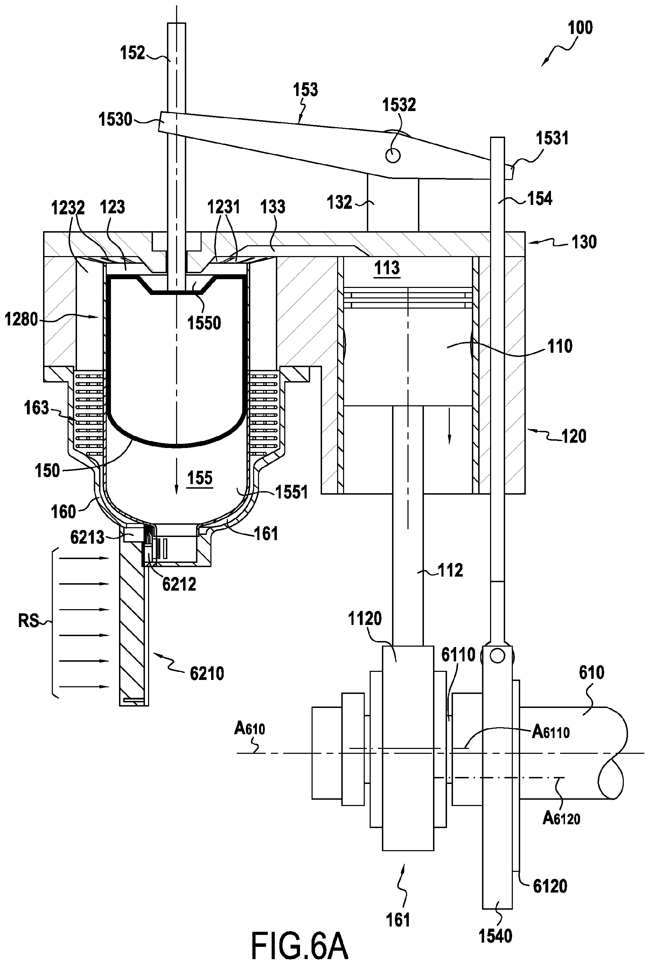

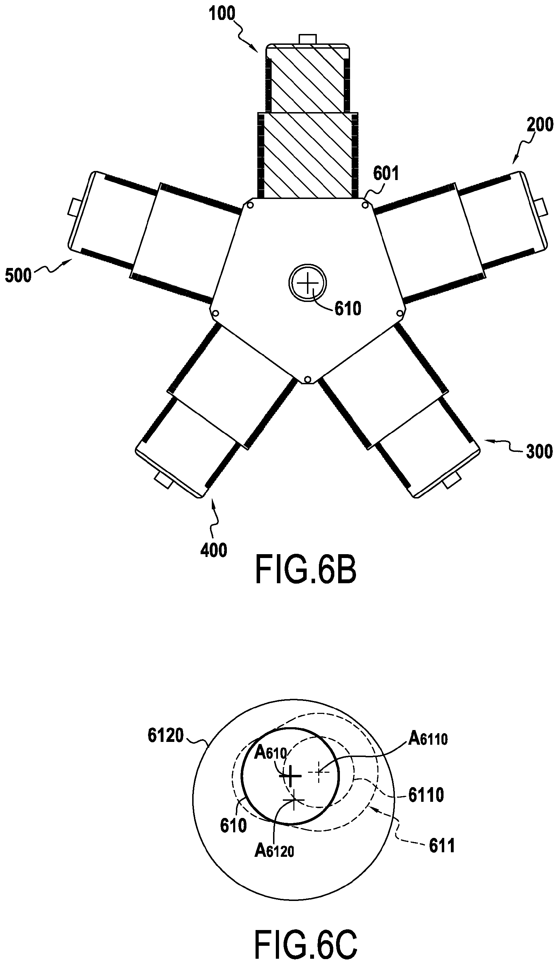

Au départ du tour (figures 6A, 6B et 6C), le piston de déplacement 150 est dans sa position haute maximale juste avant d'amorcer un mouvement de descente si bien que la majorité du gaz est présente sous le piston de déplacement, c'est-à-dire dans la chambre haute température 1551 qui est en communication avec l'entrée 6212 du boîtier 6210. Dans cette phase de rotation, qui correspond à la phase de chauffage isochore du cycle thermodynamique dans le module d'actionnement, la température et la pression du fluide présent dans le module d'actionnement 100 augmentent tandis que le volume de celui-ci est relativement constant.

La phase de chauffage isochore est suivie par la phase de détente isotherme. Le fluide présent notamment dans le boîtier 6210 se dilate alors sous l'effet de la chaleur reçue et sort de celui-ci par la sortie 6213. Le gaz traverse le régénérateur 163 où il cède une part très importante de sa chaleur. Le fluide poursuit son parcours à travers le dispositif de refroidissement 1230 et arrive dans la chambre de travail 113. La pression du fluide diminue tandis que son volume augmente en particulier dans la chambre de travail 113, ce qui entraîne un effort de poussée sur le piston moteur 110 qui amorce un mouvement de descente en même temps que le piston de déplacement. La bielle 112 du piston moteur 110 exerce alors une force de poussée sur le maneton 6110 via sa tête 1120. Cette poussée contribue à la mise en rotation du moteur 600.

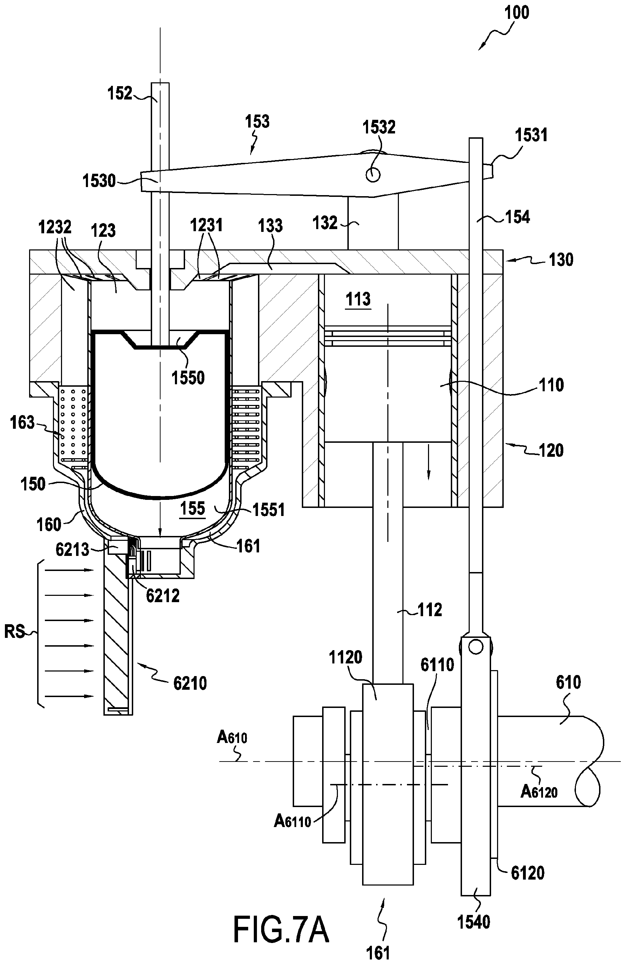

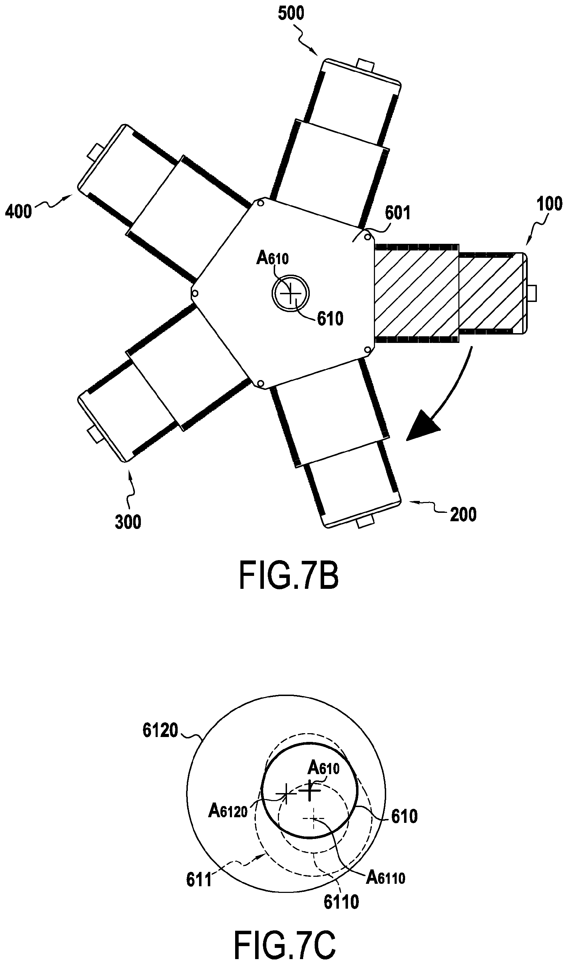

Après un quart de tour (figures 7A, 7B et 7C), le piston de déplacement 150 se trouve dans une position intermédiaire où le fluide est à la fois présent dans la chambre basse température 1550 et dans la chambre haute température 1551. La température du fluide est relativement constante tandis que sa pression diminue. Le piston moteur 110 continue également son mouvement de descente.

La phase de détente isotherme est alors suivie par la phase de refroidissement isochore du fluide dans le module d'actionnement qui correspond à une baisse de la pression et de la température du fluide.

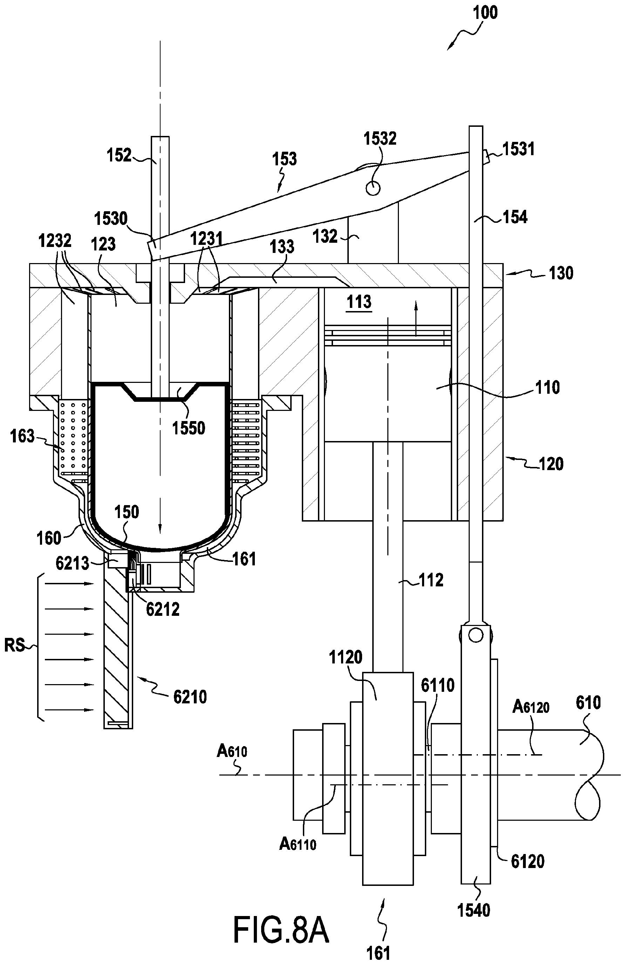

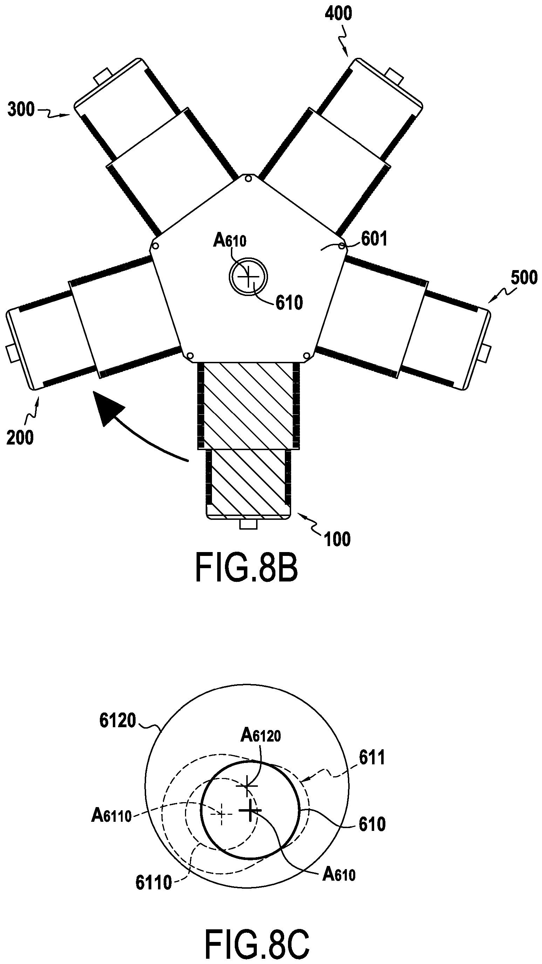

Après une moitié de tour (figures 8A, 8B et 8C), le piston de déplacement 150 est dans sa position basse maximale. La majorité du gaz est passée à travers le régénérateur 163 et se trouve dans la chambre basse température 1550 et dans la chambre de travail 113. Le piston moteur 110 est alors dans un mouvement ascendant. A ce stade, la température et la pression du gaz dans le module d'actionnement 100 sont au minimum.

La phase de refroidissement isochore est suivie par la phase de compression isothermique dans laquelle la pression du fluide augmente tandis que son volume diminue.

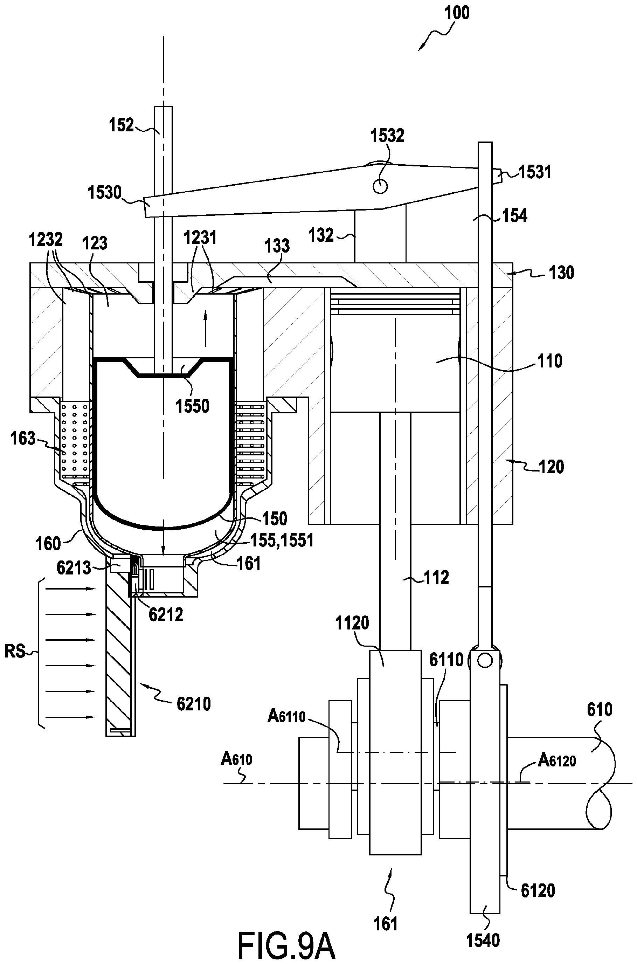

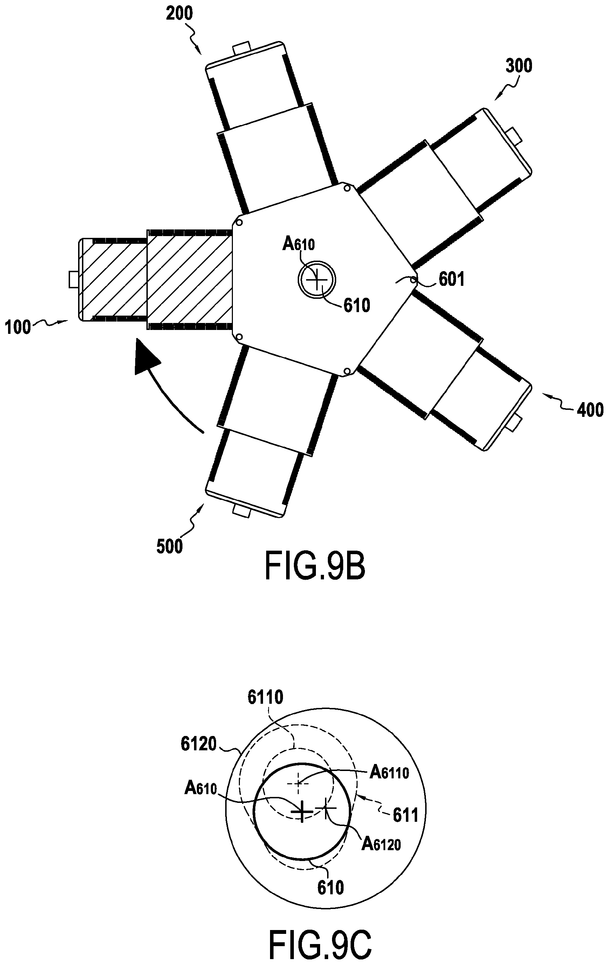

Après trois-quarts de tour (figures 9A, 9B et 9C), le piston moteur 110 est dans sa position haute maximale tandis que le piston de déplacement 150 est en mouvement ascendant, ce qui entraîne un mouvement du fluide situé dans la chambre basse température 1550 à travers le dispositif de refroidissement 1230 et surtout le régénérateur 163 qui va restituer au gaz la chaleur captée auparavant. Le gaz poursuit son mouvement en direction du boîtier 6210 et de la chambre haute température.

Après un tour complet, le moteur 600 et le module d'actionnement se retrouvent dans la configuration des figures 7A, 7B et 7C déjà décrites ci-avant.

Le moteur selon l'invention est très peu polluant car il n'utilise pas de moyens de combustion interne ou externe pour son entraînement et ne rejette donc pas de gaz de combustion. Le moteur de l'invention demande également peu d'entretien et a un fonctionnement très silencieux.

En outre, chaque module d'actionnement et, par conséquent, le moteur présentent une structure compacte notamment grâce à la présence d'un circuit de circulation de fluide reliant le dispositif de chauffage solaire à la chambre de travail du piston moteur.

Par ailleurs, dans le moteur de l'invention, chaque module d'actionnement, dont le fonctionnement est basé sur le principe du moteur Stirling, est en rotation permanente autour de l'arbre central, ce qui permet de créer une ventilation naturelle, en particulier sur la paroi externe de la chambre de travail du piston moteur, et d'accélérer, par conséquent, le refroidissement du fluide en fin de cycle thermodynamique. On améliore ainsi le rendement du moteur.

La figure 10 montre un système 900 composé d'un dispositif de support 700 sur lequel est monté le moteur à détente de fluide 600 déjà décrit en détails précédemment. Le dispositif de support 700 comprend un bâti 710 comprenant une base 711 destinée à être posée ou fixée au sol ou sur un support et un mât 712 relié à la base 711. Le mât 712 comprend un premier pallier 7120 supportant l'extrémité libre de l'arbre central 610 du moteur 600 et un deuxième pallier 7121 supportant un arbre de récupération d'énergie 750. L'arbre 750 est entraîné en rotation par le moteur 600 au moyen d'une courroie 750 reliant une roue 720 montée sur l'arbre 610 du moteur 600 à une roue 740 montée sur l'arbre 750. L'énergie ainsi récupérée par l'arbre 750 sous forme d'un mouvement de rotation peut être utilisée directement sous forme d'énergie mécanique en connectant à l'arbre 740 un dispositif mécanique (non représenté sur la figure 10), par exemple un système de pompage, ou sous forme d'énergie électrique en connectant à l'arbre 740 un alternateur (non représenté sur la figure 10) et éventuellement des batteries pour le stockage de l'énergie électrique. Tout autre système de génération d'énergie électrique ou thermique peut bien entendu être associé au système 900.

Sur la figure 11, le système 900 est utilisé avec un miroir parabolique 900 qui permet de concentrer le rayonnement solaire Rs sur les boîtiers du dispositif de chauffage solaire 620 du moteur 600. A cet effet, le miroir 900 est positionné et mobile par rapport au moteur 600 de manière à ce que son foyer corresponde à la position di dispositif de chauffage solaire 620.

## Revendications

1. Moteur à détente de fluide chaud (600) comprenant un arbre central (610) et une pluralité de modules d'actionnement (100, 200, 300, 400, 500) disposés en étoile autour de l'arbre central (610), chaque module (100 ; 200 ; 300 ; 400 ; 500) comprenant :
- un piston moteur (110 ; 210 ; 310 ; 410 ; 510) mobile dans une première enceinte (111), le piston moteur (110) délimitant dans ladite première enceinte une chambre de travail à volume variable (113),
- un piston de déplacement mobile (150 ; 250 ; 350 ; 450 ; 550) dans une deuxième enceinte (155), le piston de déplacement (150) séparant dans ladite deuxième enceinte une chambre basse température à volume variable (1550) d'une chambre haute température à volume variable (1551), la chambre basse température (1550) communicant avec la chambre de travail (113),
moteur dans lequel le piston moteur (110) et le piston de déplacement (150) de chaque module d'actionnement (100) sont respectivement reliés à l'arbre central (610) par des premier et deuxième dispositifs de transmission excentrique (1120, 112 ; 1540, 154, 153, 152) aptes à animer chaque piston d'un mouvement alternatif en translation, le mouvement du piston moteur ayant un retard de phase de 90° sur le mouvement du piston de déplacement, chaque module (100 ; 200 ; 300 ; 400 ; 500) étant entraîné en rotation autour de l'arbre central (610) de manière à accélérer le refroidissement du fluide dans la chambre de travail,
moteur dans lequel dans chaque module d'actionnement (100; 200; 300; 400; 500), le piston moteur (110; 210; 310; 410; 510) et le piston de déplacement (150; 250; 350; 450; 550) sont disposés de façon adjacente dans un même plan perpendiculaire à l'axe de l'arbre central (610),
**caractérisé en ce qu'**il comprend en outre un dispositif de chauffage de fluide (620), chaque chambre haute température (1551) communiquant avec le dispositif de chauffage de fluide (620) et chaque chambre de travail (113) étant reliée audit dispositif de chauffage de fluide par un circuit de circulation de fluide (180), et **en ce que** le circuit de circulation de fluide (180) de chaque module d'actionnement (100) comprend un régénérateur de gaz (163) s'étendant autour de la chambre haute température (1551), et **en ce que** chaque piston de déplacement (150 ; 250 ; 350 ; 450 ; 550) est relié à une première extrémité d'un basculeur (153 ; 253 ; 353 ; 453 ; 553) via une tige de guidage (152 ; 252 ; 352 ; 452 ; 552), la deuxième extrémité du basculeur étant reliée à une extrémité d'une tige de commande (154 ; 254 ; 354 ; 454 ; 554), l'extrémité opposée de la tige de commande étant reliée à un suiveur de came (1540) montée sur une came 6120) solidaire de l'arbre central (610).

2. Moteur selon la revendication 1, **caractérisé en ce que** chaque module d'actionnement (100 ; 200 ; 300 ; 400 ; 500) comprend un bloc-cylindres (120 ; 220 ; 320 ; 420 ; 520) comportant un logement interne (121 ; 221 ; 321 ; 421 ; 521) correspondant à la chambre de travail, ledit bloc-cylindres comprenant des ailettes de refroidissement (122 ; 222 ; 322 ; 422 ; 522) sur sa surface externe.

3. Moteur selon la revendication 1 ou 2, **caractérisé en ce que** le circuit de circulation de fluide (180) de chaque module d'actionnement (100) comprend un dissipateur de chaleur (1230) s'étendant autour de la chambre basse température (1550).

4. Moteur selon l'une quelconque des revendications 1 à 3, **caractérisé en ce que** le dispositif de chauffage de fluide (620) comprend une pluralité de boîtiers collecteurs (6210 ; 6220 ; 6230 ; 6240 ; 6250) renfermant chacun un réseau de canaux (6211 ; 6221 ; 6231 ; 6241 ; 6251) s'étendant entre une entrée (6212 ; 6222 ; 6232 ; 6242 ; 6252) et une sortie (6213 ; 6223 ; 6233 ; 6243 ; 6253), l'entrée (6212 ; 6222 ; 6232 ; 6242 ; 6252) de chaque boîtier (6210 ; 6220 ; 6230 ; 6240 ; 6250) étant connectée à la chambre haute température (1551) d'un module d'actionnement correspondant (100 ; 200 ; 300 ; 400 ; 500) et la sortie (6213 ; 6223 ; 6233 ; 6243 ; 6253) dudit boîtier étant connectée au circuit de circulation de fluide (180) dudit module d'actionnement correspondant (100).

5. Moteur selon l'une quelconque des revendications 1 à 4, **caractérisé en ce qu'**il comprend un dispositif de concentration du rayonnement solaire (900) apte à concentrer des rayons solaires (Rs) sur les boîtiers collecteurs (6210 ; 6220 ; 6230 ; 6240 ; 6250) du dispositif de chauffage de fluide (120).

6. Moteur selon l'une quelconque des revendications 1 à 4, **caractérisé en ce qu'**il comprend des moyens de chauffage aptes à transmettre de la chaleur aux boîtiers collecteurs (6210 ; 6220 ; 6230 ; 6240 ; 6250) du dispositif de chauffage de fluide (620).

7. Moteur selon l'une quelconque des revendications 1 à 6, **caractérisé en ce que** chaque piston moteur (110 ; 210 ; 310 ; 410 ; 510) est relié à une extrémité d'une bielle (112 ; 212 ; 312 ; 412 ; 512), l'extrémité opposée de la bielle étant reliée à une tête (1120) montée sur un maneton (6110) de vilebrequin (611) présent sur l'arbre central (610).

8. Moteur selon l'une quelconque des revendications 1 à 7, **caractérisé en ce que** chaque module d'actionnement (100 ; 200 ; 300 ; 400 ; 500) contient un fluide gazeux choisi parmi au moins un des fluides gazeux suivants : air, hydrogène, fréon et hélium.

## Patentansprüche

1. Heißfluid-Expansionsmotor (600), umfassend eine mittlere Welle (610) und eine Vielzahl von Betätigungsmodulen (100, 200, 300, 400, 500), die um die mittlere Welle (610) herum sternförmig angeordnet sind, wobei jedes Modul (100; 200; 300; 400; 500) umfasst:
- einen Antriebskolben (110; 210; 310; 410; 510), der in einem ersten Raum (111) beweglich ist, wobei der Antriebskolben (110) in dem ersten Raum eine Arbeitskammer mit variablem Volumen (113) begrenzt,
- einen Bewegungskolben (150; 250; 350; 450; 550), der in einem zweiten Raum (155) beweglich ist, wobei der Bewegungskolben (150) in dem zweiten Raum eine Niedertemperaturkammer mit variablem Volumen (1550) von einer Hochtemperaturkammer mit variablem Volumen (1551) trennt, wobei die Niedertemperaturkammer (1550) mit der Arbeitskammer (113) in Verbindung steht,
Motor, bei dem der Antriebskolben (110) und der Bewegungskolben (150) eines jeden Betätigungsmoduls (100) mit der mittleren Welle (610) durch eine erste bzw. eine zweite exzentrische Übertragungsvorrichtung (1120, 112; 1540, 154, 153, 152) verbunden sind, welche geeignet sind, jeden Kolben verschieblich hin und her zu bewegen, wobei die Bewegung des Antriebskolbens eine Phasenverzögerung von 90° gegenüber der Bewegung des Bewegungskolbens aufweist, wobei jedes Modul (100; 200; 300; 400; 500) um die mittlere Welle (610) drehend angetrieben wird, um die Abkühlung des Fluids in der Arbeitskammer zu beschleunigen,
Motor, bei dem jedes Betätigungsmodul (100; 200; 300; 400; 500), der Antriebskolben (110; 210; 310; 410; 510) und der Bewegungskolben (150; 250; 350; 450; 550) in einer gleichen Ebene senkrecht zur Achse der mittleren Welle (610) benachbart angeordnet sind,
**dadurch gekennzeichnet, dass** er ferner eine Fluidheizvorrichtung (620) umfasst, wobei jede Hochtemperaturkammer (1551) mit der Fluidheizvorrichtung (620) in Verbindung steht und jede Arbeitskammer (113) durch einen Fluidzirkulationskreis (180) mit der Fluidheizvorrichtung verbunden ist, und dass der Fluidzirkulationskreis (180) eines jeden Betätigungsmoduls (100) einen Gasregenerator (163) umfasst, der sich um die Hochtemperaturkammer (1551) herum erstreckt, und dass jeder Bewegungskolben (150; 250; 350; 450; 550) über eine Führungsstange (152; 252; 352; 452; 552) mit einem ersten Ende einer Kippvorrichtung (153; 253; 353; 453; 553) verbunden ist, wobei das zweite Ende der Kippvorrichtung mit einem Ende einer Steuerstange (154; 254; 354; 454; 554) verbunden ist, wobei das gegenüberliegende Ende der Steuerstange mit einem Nockenfolger (1540) verbunden ist, der an einem Nocken (6120) angebracht ist, welcher mit der mittleren Welle (610) fest verbunden ist.

2. Motor nach Anspruch 1, **dadurch gekennzeichnet, dass** jedes Betätigungsmodul (100; 200; 300; 400; 500) einen Zylinderblock (120; 220; 320; 420; 520) umfasst, der eine innere Aufnahme (121; 221; 321; 421; 521) aufweist, welche der Arbeitskammer entspricht, wobei der Zylinderblock Kühlrippen (122; 222; 322; 422; 522) an seiner Außenfläche aufweist.

3. Motor nach Anspruch 1 oder 2, **dadurch gekennzeichnet, dass** der Fluidzirkulationskreis (180) eines jeden Betätigungsmoduls (100) einen Kühlkörper (1230) aufweist, der sich um die Niedertemperaturkammer (1550) herum erstreckt.

4. Motor nach einem der Ansprüche 1 bis 3, **dadurch gekennzeichnet, dass** die Fluidheizvorrichtung (620) eine Vielzahl von Sammelgehäusen (6210; 6220; 6230; 6240; 6250) umfasst, die jeweils ein Netz aus Kanälen (6211; 6221; 6231; 6241; 6251) enthalten, das sich zwischen einem Einlass (6212; 6222; 6232; 6242; 6252) und einem Auslass (6213; 6223; 6233; 6243; 6253) erstreckt, wobei der Einlass (6212; 6222; 6232; 6242; 6252) eines jeden Gehäuses (6210; 6220; 6230; 6240; 6250) mit der Hochtemperaturkammer (1551) eines entsprechenden Betätigungsmoduls (100; 200; 300; 400; 500) verbunden ist, und wobei der Auslass (6213; 6223; 6233; 6243; 6253) des Gehäuses mit dem Fluidzirkulationskreis (180) des entsprechenden Betätigungsmoduls (100) verbunden ist.

5. Motor nach einem der Ansprüche 1 bis 4, **dadurch gekennzeichnet, dass** er eine Vorrichtung zum Konzentrieren der Sonnenstrahlung (900) umfasst, die geeignet ist, Sonnenstrahlen (Rs) auf die Sammelgehäuse (6210; 6220; 6230; 6240; 6250) der Fluidheizvorrichtung (120) zu konzentrieren.

6. Motor nach einem der Ansprüche 1 bis 4, **dadurch gekennzeichnet, dass** er Heizmittel umfasst, die geeignet sind, Wärme an die Sammelgehäuse (6210; 6220; 6230; 6240; 6250) der Fluidheizvorrichtung (620) zu übertragen.

7. Motor nach einem der Ansprüche 1 bis 6, **dadurch gekennzeichnet, dass** jeder Antriebskolben (110; 210; 310; 410; 510) mit einem Ende einer Pleuelstange (112; 212; 312; 412; 512) verbunden ist, wobei das gegenüberliegende Ende der Pleuelstange mit einem Kopf (1120) verbunden ist, der an einem Zapfen (6110) einer Kurbelwelle (611), welche an der mittleren Welle (610) vorhanden ist, angebracht ist.

8. Motor nach einem der Ansprüche 1 bis 7, **dadurch gekennzeichnet, dass** jedes Betätigungsmodul (100; 200; 300; 400; 500) ein gasförmiges Fluid enthält, das aus wenigstens einem der folgenden gasförmigen Fluide ausgewählt ist: Luft, Wasserstoff, Freon und Helium.

## Claims

1. A hot fluid expansion engine (600) comprising a central shaft (610) and a plurality of actuator modules (100, 200, 300, 400, 500) arranged in a star configuration around the central shaft (610), each module (100; 200; 300; 400; 500) comprising:
• a drive piston (110; 210; 310; 410; 510) movable in a first enclosure (111), the drive piston (110) defining a working chamber (113) of variable volume in said first enclosure; and
• a displacement piston (150; 250; 350; 450; 550) movable in a second enclosure (155), the displacement piston (150) separating a low temperature chamber (1150) of variable volume from a high temperature chamber (1151) of variable volume in said second enclosure, the low temperature chamber (1150) communicating with the working chamber (113);
the drive piston (110) and the displacement piston (150) of each actuator module (100) being connected to the central shaft (610) via respective first and second eccentric transmission devices (1120, 112; 1540, 154, 153, 152), each suitable for causing the corresponding piston to perform reciprocating motion in translation, the motion of the drive piston having a phase lag of 90° relative to the motion of the displacement piston, each module (100; 200; 300; 400; 500) being driven in rotation about a central shaft (610) so as to accelerate the cooling of the fluid in the working chamber;
wherein each actuator module (100; 200; 300; 400; 500), the drive piston (110; 210; 310; 410; 510) and the displacement piston (150; 250; 350; 450; 550) are arranged in adjacent manner in a common plane perpendicular to the axis of the central shaft (610),
**characterized in that** said the engine further includes a fluid heater device (620), each high temperature chamber (1551) communicating with the fluid heater device (620) and each working chamber (113) being connected to said fluid heater device via a fluid circulation circuit (180), and **in that** the fluid circulation circuit (180) of each actuator module (100) includes a gas regenerator (163) extending around the high temperature chamber (1551), and **in that** each displacement piston (150; 250; 350; 450; 550) is connected to a first end of a rocker (153; 253; 353; 453; 553) via a guide rod (152; 252; 352; 452; 552), the second end of the rocker being connected to one end of a control rod (154; 254; 354; 454; 554), the opposite end of the control rod being connected to a cam follower (1540) mounted on a cam (6120) secured to the central shaft (610).

2. An engine according to claim 1, **characterized in that** each actuator module (100; 200; 300; 400; 500) comprises a cylinder block (120; 220; 320; 420; 520) having an internal housing (121; 221; 321; 421; 521) corresponding to the working chamber, said cylinder block having cooling fins (122; 222; 322; 422; 522) on its outside surface.

3. An engine according to claim 1 or claim 2, **characterized in that** the fluid circulation circuit (180) of each actuator module (100) comprises a heat dissipater (1230) extending around the low temperature chamber (1550).

4. An engine according to any one of claims 1 to 3, **characterized in that** the fluid heater device (620) comprises a plurality of collector unit (6210; 6220; 6230; 6240; 6250) each enclosing an array of channels (6211; 6221; 6231; 6241; 6251) extending between an inlet (6212; 6222; 6232; 6242; 6252) and an outlet (6213; 6223; 6233; 6243; 6253), the inlet (6212; 6222; 6232; 6242; 6252) of each unit (6210; 6220; 6230; 6240; 6250) being connected to the high temperature chamber (1551) of a corresponding actuator module (100; 200; 300; 400; 500), and the outlet (6213; 6223; 6233; 6243; 6253) of said unit being connected to the fluid circulation circuit (180) of said corresponding actuator module (100).

5. An engine according to any one of claims 1 to 4, **characterized in that** it includes a solar radiation concentrator device (900) suitable for concentrating solar rays (Rₛ) on the collector unit (6210; 6220; 6230; 6240; 6250) of the fluid heater device (120).

6. An engine according to any one of claims 1 to 4, **characterized in that** it includes heater means suitable for transmitting heat to the collector unit (6210; 6220; 6230; 6240; 6250) of the fluid heater device (620).

7. An engine according to any one of claims 1 to 6, **characterized in that** each drive piston (110; 210; 310; 410; 510) is connected to one end of a connecting rod (112; 212; 312; 412; 512), the opposite end of the connecting rod being connected to a head (1120) mounted on a crankpin (6110) of a crankshaft (611) present on the central shaft (610).

8. An engine according to any one of claims 1 to 7, **characterized in that** each actuator module (100; 200; 300; 400; 500) contains a gaseous fluid selected from at least one of the following gaseous fluids: air, hydrogen, Freon, and helium.
